(19) Europäisches Patentamt
European Patent Office
Office européen des brevets

(11) Numéro de publication: **0 266 566 B1**

(12) **FASCICULE DE BREVET EUROPEEN**

(45) Date de publication de fascicule du brevet: **03.11.93**

(51) Int. Cl.[5]: **F15D 1/08**, F16K 25/02, G05D 16/02, F16K 47/04

(21) Numéro de dépôt: **87114478.8**

(22) Date de dépôt: **18.02.85**

(60) Numéro de publication de la demande initiale en application de l'article 76 CBE : **0 156 672**

(54) **Détendeur pour stabiliser l'écoulement de fluides lors de détente accompagnée de dégradation d'énergie cinétique.**

(30) Priorité: **01.03.84 FR 8403206**

(43) Date de publication de la demande:
**11.05.88 Bulletin 88/19**

(45) Mention de la délivrance du brevet:
**03.11.93 Bulletin 93/44**

(84) Etats contractants désignés:
**BE CH DE FR GB IT LI LU NL SE**

(56) Documents cités:
**CH-A- 199 135**
**FR-A- 1 536 175**
**FR-A- 2 128 861**
**US-A- 3 033 306**

(73) Titulaire: **FRAMATOME**
**Tour Fiat**
**Cédex 16**
**F-92084 Paris-la-Défense(FR)**

Titulaire: **GEC ALSTHOM ELECTROMECANI-OUE SA**
**38, Avenue Kléber**
**F-75116 Paris(FR)**

(72) Inventeur: **Pluviose, Michel**
**56, rue de la Chapelle**
**F-02240 Sissy par Ribemont(FR)**

(74) Mandataire: **Boireau, Jacques et al**
**Société SOSPI**
**14/16, rue de la Baume**
**F-75008 Paris (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.6/3.3.1)

## Description

La présente invention concerne des améliorations aux écoulements instables de fluides compressibles, dans les détendeurs d'installations industrielles.

Il est fréquent dans les installations industrielles véhiculant des fluides compressibles d'effectuer des détentes à travers des orifices séparant des enceintes à pressions différentes, sans récupération d'énergie cinétique.

C'est notamment le cas dans les détendeurs à trous ou crépines, tels ceux utilisés dans les centrales électriques à vapeur.

Le débit masse est la plupart du temps imposé, ainsi que les niveaux de pression amont et aval, et le rapport de pression est souvent suffisamment important pour permettre l'établissement de régimes supersoniques.

Le principe général de tels dispositifs est d'abord la mise en vitesse du fluide, puis la dégradation de cette vitesse par frottements visqueux et ondes de choc dans une évolution à enthalpie d'arrêt constante.

Dans un écoulement issu d'un orifice, et échappant à l'atmosphère ou dans une grande capacité, la forme des écoulements à la sortie de l'orifice est différente suivant le rapport de détente, néanmoins les conditions de pression de part et d'autre de l'orifice sont généralement telles que l'écoulement est en première estimation sonique dans le plan de sortie de l'orifice.

Par mélange visqueux avec le fluide ambiant, le jet se détèriorera après une longueur variable selon le rapport de détente, longueur généralement supérieure à 10 fois le diamètre de l'orifice.

Dans le cas d'un écoulent bidimensionnel issu d'un orifice, et échappant dans une cavité aval, le jet supersonique vient se coller sur une paroi ou sur l'autre assez brutalement mais sans instabilité.

En effet, par entraînement visqueux, le jet ralentit et accélère les couches de fluide périphérique. La masse entraînée est renouvelée par du fluide issu de l'aval. Comme il y a indépendance entre les couches de mélange, la plus petite perturbation déstabilise le système. .

Lorsque la pression aval est diminuée, le jet s'évase tellement que la cavité demeurée en communication avec l'aval ne peut plus être alimentée en fluide de mélange, des oscillations longitudinales et transversales de la veine fluide sont alors observées. Si à partir de cette position, la pression chute encore, la veine se stabilise et devient symétrique. En écoulement dans une cavité, des observations analogues sont faites, elles sont plus complexes à analyser car le jet tournoie dans la cavité.

L'écoulement issu de plusieurs orifices parallèle et échappant dans une grande capacité est utilisé systématiquement dans l'industrie. Il se justifie par l'augmentation des surfaces de frottement en résultant à l'aval des orifices, car la perte par contraction brusque et laminage dans le trou est généralement mineure par rapport à la perte de vitesse restante.

La détente est bloquée dès les lignes de jet se rencontrent et tout se passe dès lors comme si l'écoulement émanait d'un trou unique se détendant jusqu'à la pression laquelle ces lignes de Jet se rejoignent, ce qui réduit brutalement la surface de frottement. De plus, dans ce cas, il se produit de brutales tentations de longueur du jet.

Ainsi, jusqu'ici les techniques connues ne permettent pas d'assurer un mélange satisfaisant entre les jets et le fluide ambiant, et ne permettent pas non plus d'assurer une stabilité de la veine fluide.

Les écoulements de retour longeant les parois ne peuvent donc alimenter en fluide de mélange les jets supersoniques qui ne se dégradent dès lors qu' à travers des systèmes d'ondes de choc obliques ou droites plus ou moins stables lors de l'amorçage de la veine.

Il est illusoire de vouloir mélanger des jets à vitesses analogues.

Enfin, les écoulements instables provoquent de fortes vibrations dégradant les structures, notamment les détendeurs.

Le document FR-A-2 128 861 fait connaître un filtre antiturbulence pour fluides de préférence incompressibles, constitué par une plaque perforée, d'une face principale à l'autre, par une pluralité de canaux assurant la liaison, entre deux enceintes à pressions différentes séparées et disposées chacune respectivement de part et d'autre des faces principales de la plaque, ladite plaque présentant des canaux de régimes d'écoulement différents répartis de sorte qu'un canal à débit relativement faible voisine avec au moins un canal à débit relativement fort, ce filtre étant destiné à rendre l'écoulement le plus laminaire possible. Un tel filtre n'est pas adapté à la stabilisation des écoulements de fluides compressibles.

L'invention a pour but de pallier les inconvénients précités des détendeurs connus utilisés pour contrôler des écoulements de fluides.

Pour ce faire, l'invention propose, dans le cadre d'un détendeur à trous du type défini dans le préambule de la revendication 1, que les canaux à débit relativement faible soient constitués par des tuyères au moins partiellement divergentes supersoniques, les tuyères de ces canaux a débit relativement faible étant définies pour qu'y apparaisse dans leur partie divergente, une onde de choc de recompression, ramenant l'écoulement en régime subsonique.

En pratique, il est souvent avantageux que la partie divergente de la tuyère ait une section longitudinale de forme ogivale. La partie s'élargissant brusquement peut être tronconique, et formée d'au moins deux troncs de cône successifs, l'angle au sommet du tronc de cône aval étant plus faible que l'angle au sommet du tronc de cône le précédent en amont.

Suivant une variante, on peut réaliser des canaux associés à fort et faible débit avec un trou d'entrée cylindrique commune à un canal central à fort débit cylindrique de même diamètre, et à au moins un canal latéral à faible débit formé par une échancrure longitudinale creusée dans la paroi aval du canal central.

Chaque trou peut présenter plusieurs échancrures parallèles avantageusement réparties régulièrement circonférentiellement.

Dans un mode de réalisation pratique, le détendeur comprend au moins un canal cylindrique à fort débit de diamètre d voisin d'un canal à faible débit ayant une entrée cylindrique de diamètre $d_1$ plus petit que d, s'évasant brusquement selon un angle $\theta$ compris entre 10° et 45° jusqu'à un diamètre $d_2$, compris entre 4 $d_1$ et 15 $d_1$, suivant une ogive de rayon longitudinal R égal à

$$\frac{(d_2 - d_1),}{2\ (1-\cos\theta)}$$

les canaux à fort débit et faible débit ayant la même longueur e égale à $d_1 + R \sin\theta$ et correspondant à l'épaisseur minimum de la plaque.

Suivant les applications, les canaux à fort débit et faible débit peuvent être répartis régulièrement en alternance sur la surface de la plaque, ou bien la périphérie de la plaque peut comporter uniquement des canaux à faible débit ceinturant plusieurs canaux à fort débit contigus.

Les axes des canaux sont avantageusement perpendiculaires à la surface amont de la plaque qui peut être plane ou courbe et constituer alors une crépine.

L'invention sera mieux comprise à la lecture de la description détaillée qui va suivre et à l'examen des dessins annexés qui représentent, à titre d'exemples non limitatifs plusieurs modes de réalisation de l'invention.

La figure 1 est un diagramme montrant l'écoulement du fluide à travers un détendeur à trous suivant l'invention.

La figure 2 est une variante de la figure 1.

La figure 3 est une vue schématique en coupe axiale montrant une répartition des canaux dans un détendeur suivant l'invention.

La figure 4 est une vue analogue à celle de la figure 3 d'une variante.

La figure 5 est une vue schématique en plaque de la face amont du détendeur de la figure 4.

La figure 6 est une vue schématique en coupe axiale d'une variante de canal à faible débit de détendeur suivant l'invention.

La figure 7 est une vue en coupe axiale d'une plaque comportant un trou complexe à canaux à fort et faible débit conjugués suivant la ligne a-b de la figure 8.

La figure 8 est une vue schématique de la face aval de la plaque du trou de la figure 7.

Les éléments correspondants sur les diverses figures sont désignés par les mêmes références numériques.

Les détendeurs à trous pour gaz compressibles représentés sur les figures 1 à 8 sont constitués chacun par une plaque 101 perforée, d'une face principale 102 à l'autre 103, par des canaux à débit relativement faible 105 et des canaux à débit relativement fort 104.

Ces canaux assurent la liaison, avec détente sans récupération d'énergie cinétique, entre deux enceintes 106 et 107 à pressions différentes, séparées et disposées chacune respectivement de part et d'autre des faces principales 102, 103 de la plaque 101.

Dans le mode de réalisation des figures 1 à 6, les canaux à fort débit 104 sont constitués par de simples trous cylindriques tandis que les canaux à faible débit 105 ont un trou d'entrée cylindrique 108 de plus faible diamètre que celui des trous des canaux à fort débit 104 et se prolongent en aval par un élargissement brusque 109.

Sur le diagramme de la figure 1 est schématisé le tracé du jet supersonique du canal 104 à partir d'une enceinte à forte pression 106 dans une enceinte à faible pression 107.

Le jet supersonique est entouré de part et d'autre par deux jets subsoniques issus des canaux 105. Dans les élargissements 109 est schématisée une onde de choc 110. La pression dans l'enceinte 107 est constante au niveau de la ligne C.

Les écoulements ont un nombre de mach inférieur à 1 dans l'enceinte 106, sensiblement égal à 1 à la fin des canaux cylindriques 104-108. Les écoulements sont supersoniques dans la partie aval renflée du jet issu du canal à fort débit 104 ainsi que dans la partie en amont des ondes de choc 110 dans les canaux à faible débit 105, tandis que le nombre de mach devient inférieur à 1 à l'issue des évasements 109 des canaux à faible débit 105.

Les gradiants de pression peuvent provoquer des décollements localisés au voisinage des parois comme indiqué en D sur la figure 1.

Ces décollements ne nuisent pas à la stabilité générale de l'écoulement.

On retrouve des phénomènes analogues chaque fois qu'un échappement supersonique voisine avec un échappement subsonique comme c'est le cas des plaques à trous des figures 3 à 5.

Sur la figure 3, les canaux à fort débit 104 alternent avec les canaux à faible débit 105, tandis que dans la plaque des figures 4 et 5 les canaux à faible débit 105 sont localisés sur le pourtour de la plaque au voisinage des parois, tandis que les canaux à fort débit 104 sont rassemblés dans la partie centrale de la plaque 101.

Le mode de réalisation de la figure 2 est analogue à celui de la figure 1 mais la partie divergente 109 de la tuyère d'échappement des canaux à faible débit a une forme ogivale 111.

Dans un exemple de réalisation pratique, le canal 104 à fort débit a un diamètre D égal à 8 mm, tandis que le trou d'entrée $d_1$ des canaux à faible débit 105 a un diamètre de 2 mm, l'ogive 111 débute suivant un angle $\theta$ de 31,5° à la sortie du trou 108 pour déboucher suivant un diamètre $d_2$ égal à 17,6 mm, le rayon R de l'ogive égal à

$$\frac{(d_2 - d_1)}{2\,(1-\cos\theta)}$$

étant de 53 mm.

La plaque à trous 101 a une épaisseur e minimum, égale à $d_1 + R \sin\theta$, de 29,7 mm minimum. Pour la facilité, on prendra e égal 50 mm.

Dans le mode simplifié de réalisation de la figure 6, deux troncs de cône 112-113 d'angle $\theta$ et $\theta$ 1, l'angle $\theta$ 1 étant plus petit que l'angle $\theta$, forment une tuyère.

Les divers trous peuvent être usinés ou exécutés par électro-érosion ou moules pour former des tuyères divergentes à zone de détente réduite.

Le contour peut être déterminé de manière plus rigoureuse à l'aide de la méthode classique des caractéristiques.

Pour certaines applications, il peut être suffisant de réaliser des évasements simplement tronconiques et non biconiques comme sur la figure 6.

Les figures 7 et 8 représentent une forme d'éxécution des canaux à fort et faible débit dans laquelle les deux canaux 104 et 105 ont une entrée commune, et sous forme d'un trou cylindrique traversant de part en part la plaque 101 et constituant le canal à fort débit 104.

Quatre canaux à faible débit 105 sont réalisés sous forme d'échancrure longitudinale 115 creusée dans la partie aval de la paroi du canal central 114.

Une application particulière de telles plaques à trous suivant l'invention réside dans les détendeurs de centrales électriques, thermiques et thermo-nucléaires dont les plaques de 1,2 m de diamètre environ comportent au moins 700 trous.

Dans les détendeurs suivant l'invention le fluide le plus rapide cède, par l'effet de la viscosité, une partie de sa quantité de mouvement au fluide le plus lent provoquant un épaississement important de la zone de mélange.

Il en résulte une amélioration de l'efficacité des dispositifs détendeurs.

Les orifices des canaux à fort et à faible débit sont tous saturés. Ainsi aucune perturbation à l'aval ne peut remonter vers l'amont, il n'y a donc aucun effet d'augmentation du débit masse (par entraînement visqueux) d'un jet par son voisin, ce qui favorise de façon importante le mélange.

Lorsque des canaux à faible débit sont disposés près des parois, aucun décollement massif ne peut se manifester, seul des décollements localisés clos peuvent exister, les structures ne sont donc secouées que faiblement par l'écoulement. La stabilité d'ensemble de la veine fluide est assurée.

L'invention peut permettre d'améliorer des installations existantes comportant des plaques à trous percées de façon classique de nombreux trous cylindriques de même diamètre : il suffit de réusiner une partie des trous en forme de tuyère, ce qui permettra au mélange de s'effectuer entre deux écoulements supersoniques à vitesse différente.

Bien entendu, l'invention n'est nullement limitée aux modes décrits et représentés, elle est susceptible de nombreuses variantes accessibles à l'homme de l'art, suivant les applications envisagées et sans s'écarter pour cela du cadre de l'invention.

C'est ainsi que l'invention a été décrite plus particulièrement en application à des détendeurs à trous, mais peut aussi bien être mise en oeuvre en application à l'extrémité du labyrinthe des paliers compresseurs, et aux dispositifs d'évacuation de fluides compressibles.

## Revendications

1. Détendeur à trous pour fluides compressibles, constitué par une plaque (101), perforée d'une face principale (102) à l'autre (103), par une pluralité de canaux assurant la liaison avec détente, sans récupération d'énergie cinétique, entre deux enceintes (106), (107) à pressions différentes, séparées et disposées chacune respectivement de part et d'autre des faces principales (102), (103), de la plaque (101), la plaque (101) présentant des canaux de régimes d'écoulements différents répartis de sorte qu'un canal à débit relativement faible ( 105), voisine avec au moins un canal à débit relativement fort (104), caractérisé en ce que les canaux (105) à débit relativement faible sont

constitués par des tuyères au moins partiellement divergentes supersoniques, les tuyères de ces canaux (105) à débit relativement faible étant définies pour qu'y apparaisse dans leur partie divergente (109), une onde de choc (110) de recompression, ramenant l'écoulement en régime subsonique.

**2.** Détendeur suivant la revendication 1, caractérisé en ce que les canaux (104) à débit relativement fort sont cylindriques et les canaux à débit relativement faible (105) sont partiellement cylindriques, le diamètre des canaux de faible débit (105) étant au moins 10 fois plus petit que le diamètre des canaux de fort débit (104).

**3.** Détendeur suivant la revendication 1, caractérisé en ce que les canaux à fort débit (104), sont constitués par des trous cylindriques tandis que les canaux à faible débit (105), présentent chacun un trou d'entrée cylindrique (108), se prolongeant en aval par la partie divergente (109).

**4.** Détendeur suivant l'une des revendications 1 à 3, caractérisé en ce que la partie divergente (109) de la tuyère a une section longitudinale de forme ogivale (111).

**5.** Détendeur suivant l'une des revendications 1 à 3, caractérisé en ce que la partie divergente (109) est tronconique.

**6.** Détendeur suivant la revendication 5, caractérisé en ce que la partie divergente (109) est formée d'au moins deux troncs de cône (112,113) successifs, l'angle au sommet d'un tronc de cône aval (113) étant plus faible que l'angle au sommet du tronc de cône (112) le précédant en amont.

**7.** Détendeur suivant la revendication 1, caractérisé en ce que la plaque (101), présente au moins un trou (114) d'entrée cylindrique commune à un canal central à fort débit (104) cylindrique de même diamètre et à au moins un canal latéral (105) à faible débit formé par une échancrure longitudinale (115), creusée dans la paroi aval du canal central (114).

**8.** Détendeur suivant la revendication 7, caractérisé en ce que chaque trou présente plusieurs échancrures (115) parallèles régulièrement réparties circonférentiellement.

**9.** Détendeur suivant l'une des revendications 1 à 6, caractérisé en ce qu'il comprend au moins un canal cylindrique à fort débit (104) de diamètre d, voisin d'un canal à faible débit (105), ayant une entrée cylindrique (108) de diamètre $d_1$ plus petit que d, divergent selon un angle $\theta$, compris entre 10° et 45°, jusqu'à un diamètre $d_2$, compris entre $4d_1$ et $15d_1$, suivant une ogive (111) de rayon longitudinal R égal à $\mathbf{(d_2 - d_1)/2(1 - \cos\theta)}$, les canaux à fort débit (104) et faible débit (105), ayant la même longueur l égale au minimum à $\mathbf{d_1 + R \sin\theta}$ et correspondant à l'épaisseur de la plaque (101).

**10.** Détendeur suivant l'une des revendications 1 à 6 et 9, caractérisé en ce que les canaux à fort (104) et faible (105) débit, sont répartis régulièrement en alternance sur la surface de la plaque (101).

**11.** Détendeur suivant l'une des revendications 1 à 6 et 9, 10 caractérisé en ce que la périphérie de la plaque (101), comporte uniquement des canaux à faible débit (105).

**12.** Détendeur suivant l'une des revendications 1 à 6 et 9 à 11, caractérisé en ce que la plaque (101), comporte plusieurs canaux à fort débit (104) contigus, entourés d'une ceinture au moins partielle de canaux à faible débit (105).

**13.** Détendeur suivant l'une des revendications 1 à 12, caractérisé en ce que les axes des canaux (104, 105), sont perpendiculaires à la surface amont (102) de la plaque (101).

**14.** Détendeur suivant l'une des revendications 1 à 13, caractérisé en ce que la plaque (101) est plane.

**15.** Détendeur suivant l'une des revendications 1 à 14, caractérisé en ce que la plaque (101) est courbe (116).

**Claims**

**1.** A pressure reducer with holes for compressible fluids, said pressure reducer being constituted by a perforated piate (101) having a plurality of through channels between one of its main faces (102) and its other main face (103), the channels providing interconnection, without kinetic energy being recovered, between two enclosures (106), (107) that are at different pressures, that are separate, and that are disposed on respective sides of the main faces (102), (103) of the plate (101), the plate (101) having channels that have different flow-rates and that are distributed such that a relatively low flow-rate channel (105) is adjacent to at

least one relatively high flow-rate channel (104), said pressure reducer being characterized in that the relatively low flow-rate channels (105) are constituted by supersonic nozzles that are divergent at least in part, the nozzle of each of the relatively low flow-rate channels (105) being delimited such that a recompression shock wave (110) appears in its divergent portion (109) reducing the flow-rate to subsonic levels.

2. A pressure reducer according to claim 1, characterized in that the relatively high flow-rate channels (104) are cylindrical and the relatively low flow-rate channels (105) are cylindrical in part, the diameter of the low flow-rate channels (105) being at least ten times smaller than the diameter of the high flow-rate channels (104).

3. A pressure reducer according to claim 1, characterized in that the high flow-rate channels (104) are constituted by cylindrical holes, whereas each of the low flow-rate channels (105) has a cylindrical inlet hole (108) which is extended downstream by the divergent portion (109).

4. A pressure reducer according to any one of claims 1 to 3, characterized in that a longitudinal section through the divergent portion (109) of the nozzle is ogive-shaped (111).

5. A pressure reducer according to any one of claims 1 to 3, characterized in that the divergent portion (109) is frustoconical.

6. A pressure reducer according to claim 5, characterized in that the divergent portion (109) is formed of at least two successive truncated cones (112, 113), the angle at the apex of the downstream truncated cone (113) being smaller than the angle at the apex of the truncated cone (112) preceding it upstream.

7. A pressure reducer according to claim 1, characterized in that the plate (101) has at least one cylindrical inlet hole (114) that is common to a high flow-rate cylindrical central channel (104) having the same diameter, and to at least one low flow-rate side channel (105) formed by a longitudinal recess (115) provided in the downstream wall of the central channel (114).

8. A pressure reducer according to claim 7, characterized in that each hole has a plurality of parallel recesses (115) uniformly distributed around the circumference of the hole.

9. A pressure reducer according to any one of claims 1 to 6, characterized in that it includes at least one cylindrical high flow-rate channel (104) of diameter d, adjacent to a low flow-rate channel (105) having a cylindrical inlet (108) of diameter $d_1$ that is smaller than d, divergent at an angle Θ lying in the range 10° to 45°, out to a diameter $d_2$ lying in the range $4d_1$ to $15d_1$ to form an ogive (111) whose longitudinal radius R is equal to $(d_2 - d_1)/2(1 - \cos \Theta)$, the high flow-rate channels (104) and the low flow-rate channels (105) having the same length l of not less than $d_1 + R \sin \Theta$, and corresponding to the thickness of the plate (101).

10. A pressure reducer according to any one of claims 1 to 6 and 9, characterized in that the high flow-rate channels (104) and the low flow-rate channels (105) are uniformly distributed alternately over the surface of the plate (101).

11. A pressure reducer according to any one of claims 1 to 6 and 9, 10, characterized in that the periphery of the plate (101) includes solely low flow-rate channels (105).

12. A pressure reducer according to any one of claims 1 to 6 and 9 to 11, characterized in that the plate (101) includes a plurality of adjacent high flow-rate channels (104) surrounded at least in part by a band of low flow-rate channels (105).

13. A pressure reducer according to any one of claims 1 to 12, characterized in that the axes of the channels (104, 105) are perpendicular to the upstream surface (102) of the plate (101).

14. A pressure reducer according to any one of claims 1 to 13, characterized in that the plate (101) is plane.

15. A pressure reducer according to any one of claims 1 to 14, characterized in that the plate (101) is curved (116).

**Patentansprüche**

1. Druckentspanner mit Löchern für komprimierbares Fluid, bestehend aus einer Platte (101), die von einer Hauptseite (102) zur anderen (103) von einer Vielzahl von Kanälen durchzogen ist, die die Verbindung mit Entspannung und ohne Wiedergewinnung der kinetischen Energie zwischen zwei Räumen (106, 107) unterschiedlichen Drucks gewährleistet, die getrennt sind und je auf einer der Hauptseiten (102, 103) der Platte (101) liegen, wobei die

Platte verteilte Kanäle mit unterschiedlichen Strömungsbedingungen besitzt, derart, daß ein Kanal (105) mit verhältnismäßig geringem Durchsatz mindestens einem Kanal (104) mit relativ großem Durchsatz benachbart ist, dadurch gekennzeichnet, daß die Kanäle (105) mit verhältnismäßig geringem Durchsatz von zumindest teilweise divergenten Überschalldüsen gebildet werden, wobei die Düsen dieser Kanäle (105) mit verhältnismäßig geringem Durchsatz so definiert sind, daß in ihrem divergenten Bereich (109) eine Rekompressions-Stoßwelle (110) entsteht, die die Strömung unter die Schallgrenze absenkt.

**2.** Entspanner nach Anspruch 1, dadurch gekennzeichnet, daß die Kanäle (104) mit verhältnismäßig großem Durchsatz zylindrisch sind und die Kanäle (105) mit verhältnismäßig geringem Durchsatz zum Teil zylindrisch sind mit einem Durchmesser der Kanäle (105) mit geringem Durchsatz, der mindestens zehnmal kleiner als der Durchmesser der Kanäle (104) mit großem Durchsatz ist.

**3.** Entspanner nach Anspruch 1, dadurch gekennzeichnet, daß die Kanäle (104) mit großem Durchsatz von zylindrischen Löchern gebildet werden, während die Kanäle (105) mit geringem Durchsatz je ein zylindrisches Eingangsloch (108) aufweisen, das sich stromabwärts in einem divergenten Bereich (109) fortsetzt.

**4.** Entspanner nach einem der Ansprüche 1 bis 3, dadurch gekennzeichnet, daß der divergente Bereich (109) der Düse einen spitzbogenförmigen Querschnitt (111) besitzt.

**5.** Entspanner nach einem der Ansprüche 1 bis 3, dadurch gekennzeichnet, daß der divergente Bereich (109) kegelstumpfförmig ist.

**6.** Entspanner nach Anspruch 5, dadurch gekennzeichnet, daß der divergente Bereich (109) von mindestens zwei aufeinanderfolgenden Kegelstumpfformen (112, 113) gebildet wird, wobei der Spitzenwinkel des stromabwärts liegenden Kegelstumpfs (113) kleiner als der Spitzenwinkel des diesem stromaufwärts vorausgehenden Kegelstumpfs (112) ist.

**7.** Entspanner nach Anspruch 1, dadurch gekennzeichnet, daß die Platte (101) mindestens ein zylindrisches Eingangsloch (114) aufweist, das einem zylindrischen zentralen Kanal (104) mit großem Durchsatz dieses Durchmessers und mindestens einem seitlichen Kanal (105) mit geringem Durchsatz gemeinsam ist, der von einer Längsrinne (115) gebildet wird, die in die stromabwärtige Wand des zentralen Kanals (114) eingeschnitten ist.

**8.** Entspanner nach Anspruch 7, dadurch gekennzeichnet, daß jedes Loch mehrere parallele Rinnen (115) aufweist, die gleichmäßig über den Umfang verteilt sind.

**9.** Entspanner nach einem der Ansprüche 1 bis 6, dadurch gekennzeichnet, daß er mindestens einen zylindrischen Kanal (104) großen Durchsatzes mit einem Durchmesser d neben einem Kanal (105) mit geringem Durchsatz aufweist, dessen zylindrischer Eingang (108) einen kleineren Durchmesser $d_1$ als d besitzt und der gemäß einem Winkel $\Theta$ zwischen 10 und 45° sich bis auf einen Durchmesser $d_2$ erweitert, der zwischen $4d_1$ und $15d_1$ liegt, in Form eines Spitzbogens (111) mit einem Längsradius R gleich $(d_2 - d_1)/[2(1 - \cos\Theta)]$, wobei die Kanäle (104, 105) mit großem und geringem Durchsatz die gleiche Länge l besitzen, die mindestens $d_1 + R.\sin\Theta$ entspricht und damit der Mindestdicke der Platte (101).

**10.** Entspanner nach einem der Ansprüche 1 bis 6 und 9, dadurch gekennzeichnet, daß die Kanäle (104, 105) mit großem und geringem Durchsatz gleichmäßig abwechselnd über die Fläche der Platte (101) verteilt sind.

**11.** Entspanner nach einem der Ansprüche 1 bis 6 und 9, 10, dadurch gekennzeichnet, daß am Rand der Platte (101) nur Kanäle (105) mit geringem Durchsatz vorhanden sind.

**12.** Entspanner nach einem der Ansprüche 1 bis 6 und 9 bis 11, dadurch gekennzeichnet, daß die Platte (101) mehrere einander benachbarte Kanäle (104) mit großem Durchsatz aufweist, die zumindest teilweise von einem Gürtel von Kanälen (105) mit geringem Durchmesser umgeben sind.

**13.** Entspanner nach einem der Ansprüche 1 bis 12, dadurch gekennzeichnet, daß die Achsen der Kanäle (104, 105) senkrecht zur stromaufwärts gelegenen Seite (102) der Platte (101) verlaufen.

**14.** Entspanner nach einem der Ansprüche 1 bis 13, dadurch gekennzeichnet, daß die Platte (101) eben ist.

**15.** Entspanner nach einem der Ansprüche 1 bis 14, dadurch gekennzeichnet, daß die Platte (101) gekrümmt ist (116).

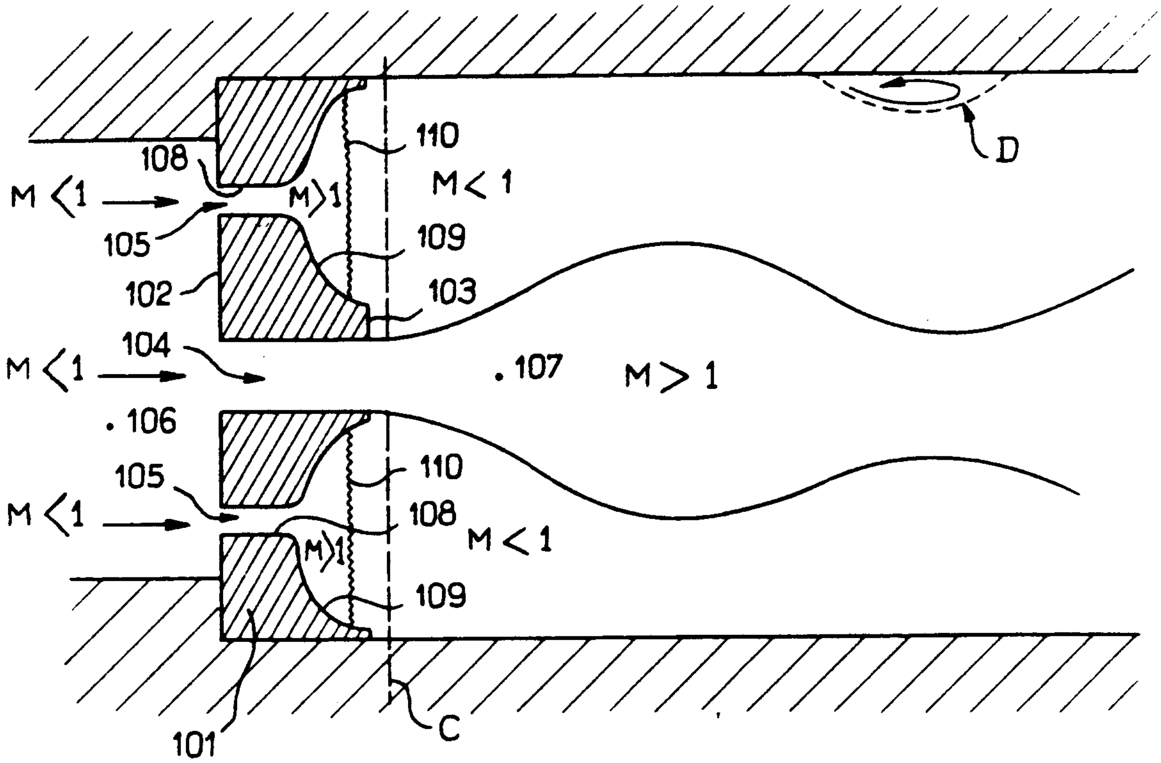
110
M< 1
D
108
M <1
M)1
105
109
102
103
104
M <1
. 107
M > 1
. 106
110
105
108
M <1
M < 1
M)1
109
101
C

FIG. 1

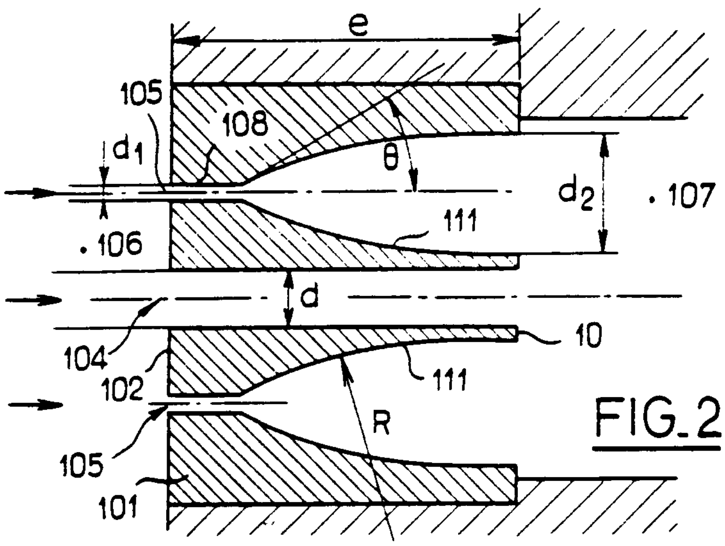


FIG.2

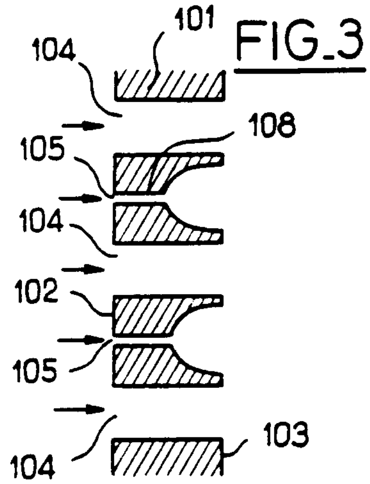


FIG.3

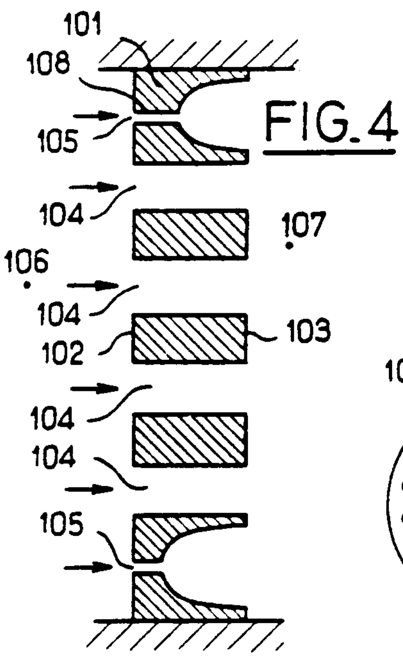


FIG.4

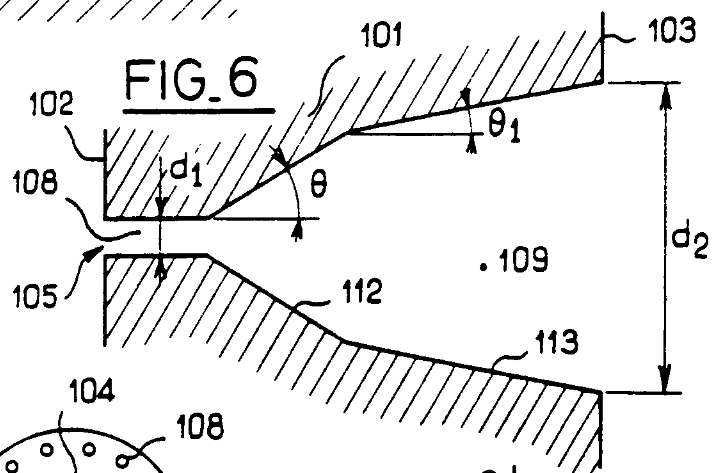


FIG.6

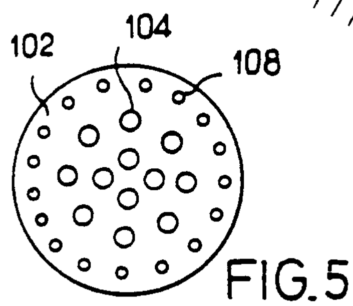


FIG.5

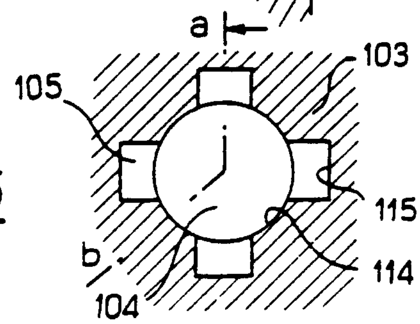


FIG.8

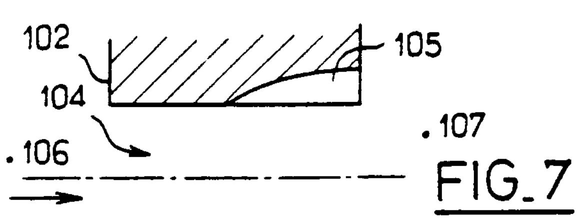


FIG.7